# EUROPEAN PATENT APPLICATION

(11) **EP 3 636 358 A1**
(43) Date of publication of application: **15.04.2020**
(21) Application number: 18834661.3
(22) Date of filing: 26.06.2018
(51) Int. Cl.: B08B 9/032, B01J 19/00

(54) **FLUID FLOW DEVICE CLEANING METHOD AND FLUID FLOW DEVICE**

(30) Priority: 20.07.2017 JP 2017140491
(71) Applicant: Kabushiki Kaisha Kobe Seiko Sho (Kobe Steel, Ltd.), Kobe-shi, Hyogo 651-8585 (JP)
(72) Inventor: MATSUOKA, Akira, Kobe-shi, Hyogo 651-2271 (JP); NOISHIKI, Koji, Takasago-shi, Hyogo 676-8670 (JP); OZONO, Tomohiro, Takasago-shi, Hyogo 676-8670 (JP)
(74) Representative: TBK
(86) International application number: PCT/JP2018/024240
(87) International publication number: WO 2019/017165

(57) **Abstract**

Provided is a method for cleaning an arbitrary fluid channel in a fluid flow device including a channel-forming body (20) forming a plurality of fluid channels (12A to 12E), a first header (40), and a second header. The method includes opening a cleaning-target channel included in the plurality of fluid channels (12A to 12E) and closing a non-cleaning-target channel which is the other fluid channel; and supplying a cleaning liquid to a cleaning-liquid supply header selected from the first header (40) and the second header in a state where the non-cleaning-target channel is closed to cause the cleaning liquid to flow only through the cleaning-target channel.

## Description

### Technical Field

The present invention relates to a technique for cleaning a fluid flow device which forms a plurality of channels to allow a processing object fluid, that is, a fluid to be processed, to flow therein for the purpose of chemical operation, such as reaction and extraction of the processing object fluid, or heat exchange.

### Background Art

As a device forming a passage for allowing a processing object fluid to flow therein, conventionally known is a device recited in Patent Literature 1. The device recited in the literature includes a channel structure which forms a plurality of micro-channels (fine channels). The plurality of micro-channels, which extend parallel to each other, allow a processing object fluid to flow along the micro-channel.

However, being fine, the micro-channel can cause an abnormal flow due to an increase in the viscosity or a reduction in pressure or due to foreign substances contained in the processing object fluid or the like; in the worst case, closure may occur.

The literature discloses, as means for detecting the closure, forming a plurality of communication channels providing communication between the fluid channels and the outside of the device, in addition to the original fluid channel, and detecting pressure of a processing object fluid at a plurality of positions in the fluid channel through the communication channels.

When there actually occurs an abnormal flow such as closure in any channel in the above-described fluid flow device, cleaning the inside of the channel is required. As a method therefor, Patent literature 1 discloses supplying a cleaning liquid into the communication channels to cause the cleaning liquid to flow through the fluid channels leading to the communication channels; however, it is not easy to supply the cleaning liquid into such fine fluid channels individually, which causes a special device to be required for the supply.

### Citation List

### Patent Literature

Patent literature 1: Patent No. 5885548 (FIG. 3)

### Summary of Invention

An object of the present invention is to provide a method that enables a fluid channel to be effectively cleaned by effective utilization of an existing facility, the fluid channel being included in a plurality of fluid channels that are formed in a channel-forming body of a fluid flow device and being a fluid channel in which an abnormal flow occurs, and to provide a fluid flow device having a function of making the cleaning possible.

To achieve the object, the present inventors have focused on an inlet header and an outlet header which are usually included in the fluid flow device. The inlet header is attached to the channel-forming body so as to cover collectively respective inlets of a plurality of fluid channels formed by the channel-forming body to distribute a fluid supplied to the inlet header to each inlet of the plurality of fluid channels. Similarly, the outlet header is attached to the channel-forming body so as to collectively cover respective outlets of the plurality of fluid channels to receive a fluid discharged from each outlet of the plurality of fluid channels and leads the fluid to the outside of the device.

The fluid flow device having such inlet and outlet headers allows a cleaning liquid to flow through an arbitrary fluid channel through supply of the cleaning liquid to one of the inlet header and the outlet header. However, through simple supply of the cleaning liquid to one header, it is difficult to effectively clean the fluid channel having an abnormal flow because the cleaning liquid flows mainly through (normal) fluid channel having a lower flow resistance lower than that of the fluid channel having the abnormal flow. Besides, it involves wasteful consumption of energy for supplying the cleaning liquid.

The present invention has been made from the foregoing point of view. Provided is a method for cleaning an arbitrary fluid channel of a fluid flow device, as a cleaning-target channel, the fluid flow device including a channel-forming body which forms a plurality of fluid channels each having a first opening and a second opening at opposite ends, the channel-forming body having an outer surface in which there exist a first region where the respective first openings of the plurality of fluid channels are gathered and a second region where the second openings of the plurality of fluid channels are gathered, a first header which covers collectively the first openings in the first region to thereby define a first space communicating with each of the first opening, and a second header which covers collectively the second openings in the second region to thereby define a second space communicating with each of the second openings, the fluid flow device allowing a fluid supplied to one of the first header and the second header to flow through the plurality of fluid channels and to flow into the other of the first header and the second header. The method includes: closing each non-cleaning-target channel which is included in the plurality of fluid channels and other than the cleaning-target channel; and supplying a cleaning liquid to a cleaning-liquid supply header which is selected from the first header and the second header, in a state where the non-cleaning-target channels is closed, to thereby cause the cleaning liquid to flow only through the cleaning-target channel.

Also provided is a fluid flow device having a function of making such cleaning as described above be possible. The fluid flow device includes: a channel-forming body which forms a plurality of fluid channels each having a first opening and a second opening at opposite ends thereof, the channel-forming body having an outer surface in which there exist a first region where the first openings of the plurality of fluid channels are gathered and a second region where the second openings of the plurality of fluid channels are gathered; a first header which covers collectively the first openings in the first region to thereby define a first space communicating with each of the first openings; a second header which covers collectively the second openings in the second region to thereby define a second space communicating with each of the second openings; and a channel opening/closing device which opens/closes the plurality of fluid channels. The channel opening/closing device is switchable between a fully opening state of opening all the plurality of fluid channels to allow a fluid to flow through the plurality of fluid channels and a plurality of flow restriction states corresponding to the plurality of fluid channels, respectively, each of the flow restriction states being a state of opening an opening-target fluid channel, which is included in the plurality of fluid channels and corresponds to the flow restriction state, while closing a closing-target fluid channel, which is included in the plurality of fluid channels and other than the opening-target fluid channel, to thereby allow a fluid to flow only through the opening-target fluid channel.

### Brief Description of Drawings

FIG. 1 is a plan view of a fluid flow device according to a first embodiment of the present invention.
FIG. 2 is a side view of the fluid flow device shown in FIG. 1.
FIG. 3 is a front view of the fluid flow device shown in FIG. 1.
FIG. 4 is a plan view showing a cross-section taken along line IV-IV shown in FIG. 2.
FIG. 5 is a side view showing a cross-section taken along line V-V shown in FIG. 1.
FIG. 6 is a front view showing a cross-section taken along line VI-VI shown in FIG. 5.
FIG. 7 is a sectional plan view showing a part of the fluid channel device shown in FIG. 4, and showing a part including a channel opening/closing device in an enlarged manner.
FIG. 8 is a plan view showing a cross-section of the fluid flow device according to a second embodiment of the present invention, the cross-section corresponding to the cross-section shown in FIG. 4.
FIG. 9 is a side view showing a cross-section of the fluid flow device shown in FIG. 8, the cross-section corresponding to the cross-section shown in FIG. 5.
FIG. 10 is a front view showing a cross-section taken along line X-X in FIG. 11.
FIG. 11 is a sectional plan view showing a part of the fluid channel device shown in FIG. 8, and showing a part including the channel opening/closing device in an enlarged manner.
FIG. 12 is a plan view showing a cross-section of a fluid flow device according to a third embodiment of the present invention, the cross-section corresponding to the cross-section shown in FIG. 4.
FIG. 13 is a side view showing a cross-section of the fluid flow device shown in FIG. 12, the cross-section corresponding to the cross-section shown in FIG. 5.
FIG. 14 is a front view of a channel-forming body of the fluid flow device shown in FIG. 12, the view seen from an inlet side.
FIG. 15 is a front view of a first opening/closing plate constituting a channel opening/closing device of the fluid flow device shown in FIG. 12.
FIG. 16 is a front view of the first opening/closing plate constituting the channel opening/closing device of the fluid flow device shown in FIG. 12.
FIG. 17 is a front view showing a state where the first opening/closing plate and the second opening/closing plate are fixed at a fully opening position.
FIG. 18 is a front view showing a state where the first opening/closing plate and the second opening/closing plate are fixed at a specific closing position among a plurality of closing positions.
FIG. 19 is a front view showing a state where the first opening/closing plate and the second opening/closing plate are fixed at a specific closing position different from the closing position shown in FIG. 18 among the plurality of closing positions.

### Description of Embodiments

Preferred embodiments of the present invention will be described with reference to the drawings.

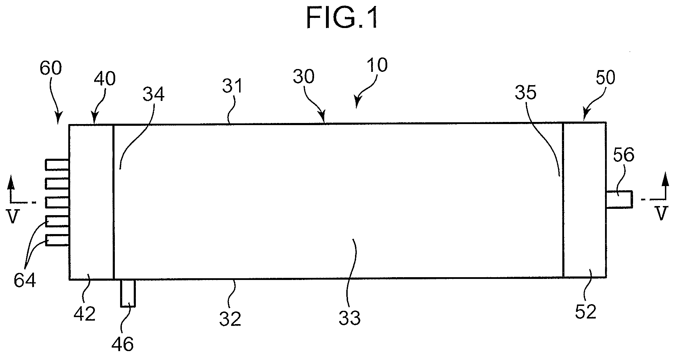

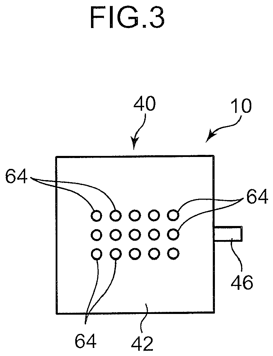

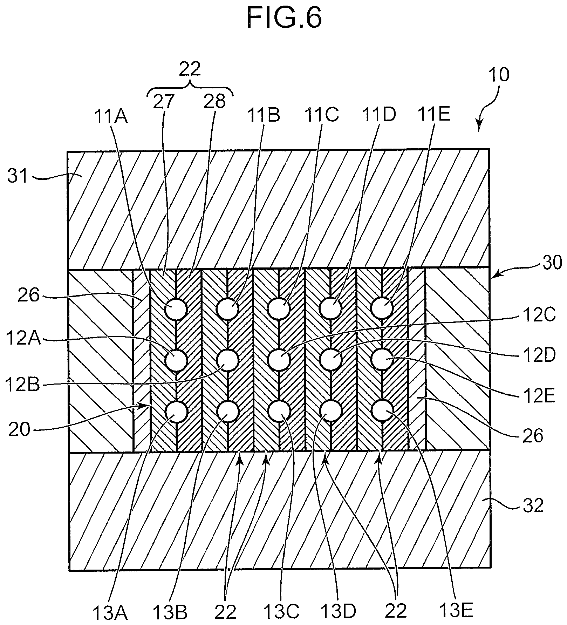

FIG. 1 to FIG. 7 show a fluid flow device 10 according to a first embodiment of the present invention. The fluid flow device 10 forms a plurality of fluid channels to allow a processing object fluid to flow through the fluid channels. The object of flow of a processing object fluid according to the present invention is not limited. The processing object fluid may be a fluid capable of undergoing chemical reaction with another fluid when mixed therewith or may be one to be subjected to another chemical operation such as extraction. Alternatively, the fluid may be one to be heated or cooled through heat exchange with a heat medium. In other words, the fluid flow device according to the present invention may be any of a micro-channel reactor, another chemical device, and a heat exchanger.

The fluid flow device 10 incudes a channel-forming body 20, an outer wall 30, a first header 40, a second header 50, and a channel opening/closing device 60.

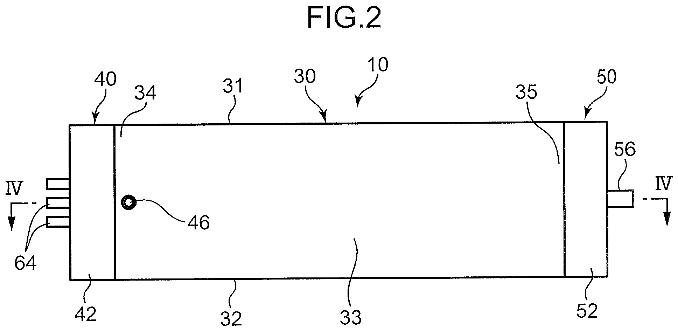

The channel-forming body 20 forms a plurality of fluid channels extending in respective directions parallel to each other. The channel-forming body 20 according to the embodiment has a rectangular parallelepiped shape with a specific longitudinal direction (a right-left direction in FIG. 1 and FIG. 2), the longitudinal direction being a direction parallel to respective longitudinal directions of the plurality of fluid channels. The plurality of fluid channels according to the present embodiment are disposed over three stages aligned in an up-down direction orthogonal to the longitudinal directions of the fluid channel. Specifically, the plurality of fluid channels include five fluid channels 11A, 11B, 11C, 11D, and 11E aligned at the upper-most stage, five fluid channels 12A, 12B, 12C, 12D, and 12E aligned at the middle stage, and five fluid channels 13A, 13B, 13C, 13D, and 13E aligned at the lower-most stage. Each of the plurality of fluid channels 11A to 11E, 12A to 12E, and 13A to 13E (hereinafter, all the fluid channels will be generically denoted as "fluid channels 11 to 13" for convenience's sake) has a circular cross-section and extends linearly along a longitudinal direction of the channel-forming body 20.

Specifications of the plurality of fluid channels according to the present invention, such as shape, the number of channels, direction, and arrangement are not limited to those recited above. The specifications can be freely set. For example, the fluid channel may include a curved portion or meandering portion, and may be configured to allow a fluid to flow not horizontally but vertically, in the up-down direction.

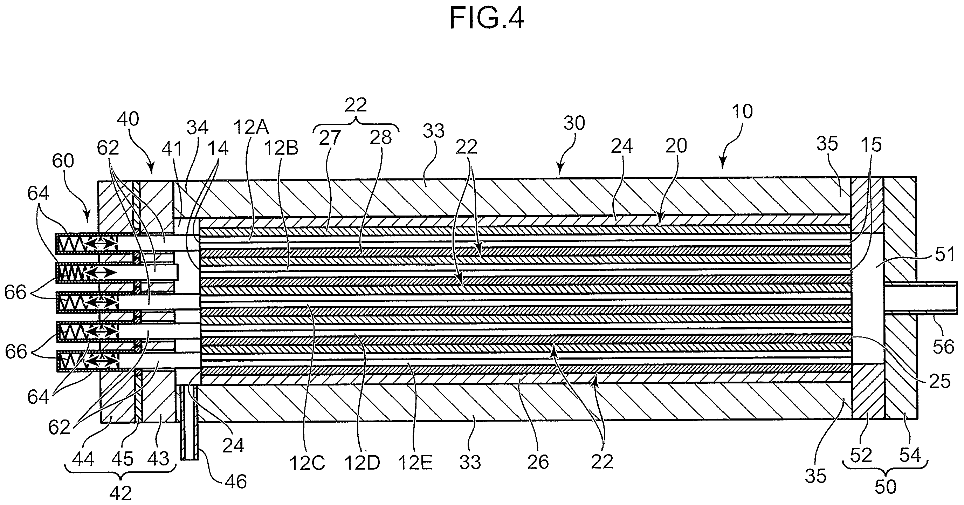

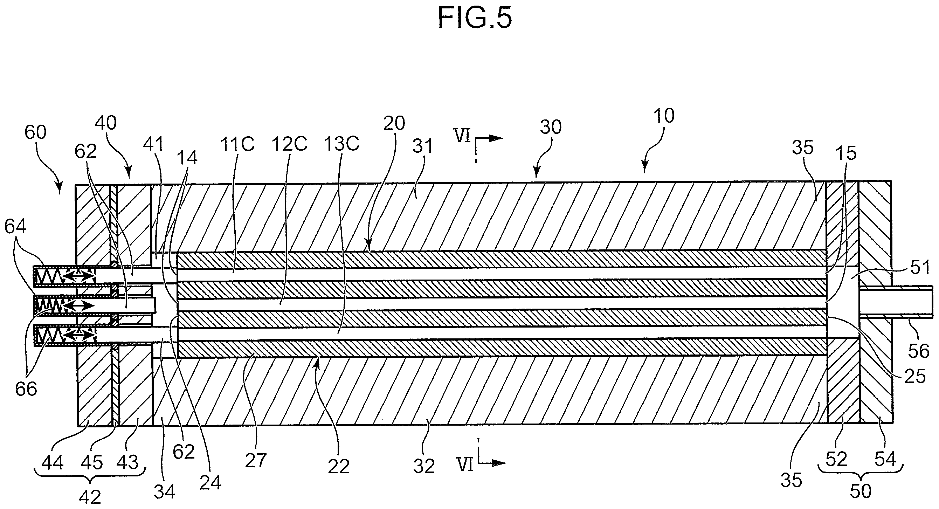

Each of the plurality of fluid channels 11 to 13 has a first opening 14 and a second opening 15 at longitudinally opposite ends thereof. The first opening 14 and the second opening 15 function as an inlet opening and an outlet opening, respectively, in normal use. Accordingly, the outer surface at one end of the channel-forming body 20 in the longitudinal direction (a left-side end surface in FIG. 4 and FIG. 5), namely, a first end surface 24, corresponds to an inlet-side end surface in normal use. In the first end surface 24, there exists a first region where the first openings 14 of the plurality of fluid channels 11 to 13 are gathered. Similarly, the outer surface at the other end of the channel-forming body 20 in the longitudinal direction (a right-side end surface in FIG. 4 and FIG. 5), namely, a second end surface 25, corresponds to an outlet-side end surface in normal use. In the second end surface 25, there exists a second region where the second openings 15 of the plurality of fluid channels 11 to 13 are gathered.

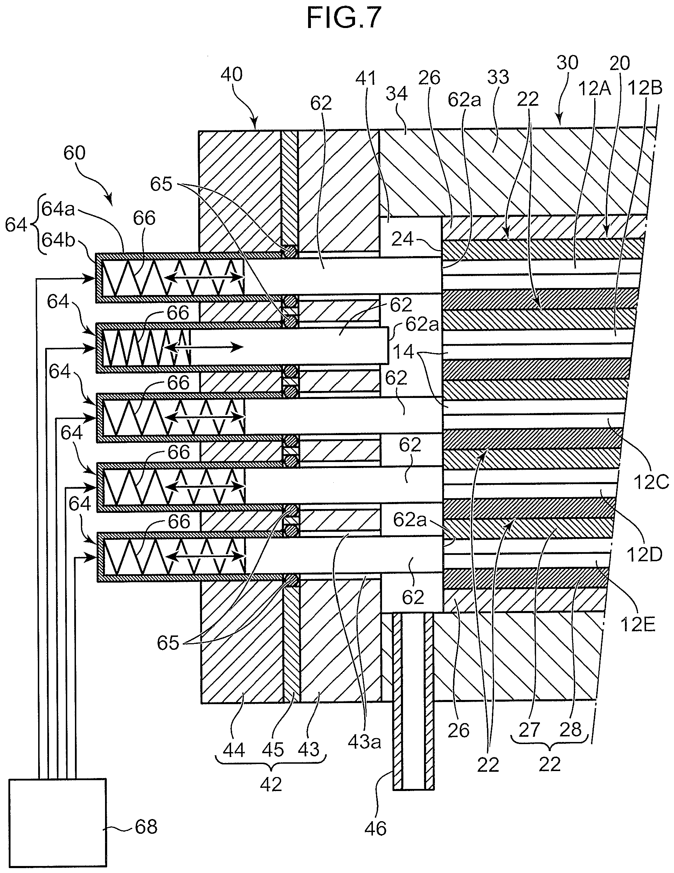

The channel-forming body 20 according to the present embodiment includes a plurality of channel-forming plates 22 and an adjustment plate 26. The plurality of channel-forming plates 22 are laminated in the width direction. Each of the plurality of channel-forming plates 22 forms three fluid channels aligned in the up-down direction and included in the fluid channels 11 to 13. For example, the channel-forming plate 22 which is disposed at the center in the width direction and shown in FIG. 5 and FIG. 7 forms the fluid channels 11C, 12C, and 13C included in the plurality of fluid channels 11 to 13. Each of the channel-forming plates 22 is constituted by a pair of flat plate-shaped groove plates 27 and 28 that are laminated. Each of the groove plates 27 and 28 has one surface formed with a groove having a semicircular cross-section is formed, and the groove plates 27 and 28 are laminated and joined with each other so as to oppose the grooves each other, so that each groove forms the fluid channel. The adjustment plate 26 is joined to the outer-side surface of the channel-forming plates 22 positioned at both sides in the width direction of the plurality of channel-forming plates 22.

The outer wall 30 has a cylindrical-shape to enclose the channel-forming body 20 vertically and horizontally. In detail, the outer wall 30 includes an upper wall 3 1 and a lower wall 32 which are laid on an upper surface and a lower surface of the channel-forming body 20, respectively, and are joined thereto, and a pair of right and left side walls 33 laid on outer-side surfaces of the right and left adjustment plates 26 of the channel-forming body 20, respectively, and are joined thereto. The outer wall 30 and the adjustment plate 26 can be appropriately omitted according to specification.

The first header 40 covers respective first openings 14 of the plurality of fluid channels 11 to 13 gathered in the first region, thereby defining a first space 41 which communicates with each of the first openings 14. The first space 41 functions as a distribution space for distributing a processing object fluid to the plurality of fluid channels 11 to 13 in normal use.

The first header 40 according to the present embodiment is comprised of a first end portion 34 of the outer wall 30, and an end wall 42. The first end portion 34 is one of longitudinally opposite end portions of the outer wall 30, being the end portion on the inlet side. The first end portion 34 is formed of respective one end portions of opposite end portions of the upper and lower walls 31 and 32 and the pair of the side walls 33, protruding longitudinally beyond the first end surface 24 of the channel-forming body 20. The end plate 42 is joined to the end surface of the first end portion 34, thereby being held at a position apart from the first end surface 24 of the channel-forming body 20 longitudinally of the channel-forming body 20 by an amount equivalent to the first space 41.

The first header 40 serves to support the channel opening/closing device 60 in addition to definition of the first space 41. For this, the end wall 42 is formed of a plurality of plates divided in the longitudinal direction, namely, an inner plate 43 joined to the first end portion 34 of the outer wall 30, an outer plate 44 arranged on the longitudinally outer side of the inner plate 43, and an intermediate plate 45 interposed between the inner plate 43 and the outer plate 44. The plurality of plates 43, 44, and 45 are laminated and fixed to the first end portion 34.

The first header 40 is attached with an introduction tube 46 for introducing a processing object fluid into the first space 41. In this embodiment, the introduction tube 46 is fixed to the first end portion 34 while penetrating the first end portion 34 of the outer wall 30 in the thickness direction thereof, thus bringing the first space 41 into communication with a fluid supply source outside the device through the introduction tube 46.

The second header 50 covers the respective second openings 15 of the plurality of fluid channels 11 to 13 gathered in the second region, thereby defining a second space 51 which communicates with each of the second openings 15. The second space 51 functions as an receiving space for receiving a processing object fluid which is discharged through the plurality of fluid channels 11 to 13 in normal use.

The second header 50 according to the present embodiment is formed of an inner plate 52 and an outer plate 54 that are laminated. The inner plate 52 has a hollow shape enclosing the second space 51 vertically and horizontally, being joined to the second end surface 25 of the channel-forming body 20 and to an end surface of a second end portion 35 of the outer wall 30. The second end portion 35 is one of longitudinally opposite end portions of the outer wall 30, being the end portion at the side opposite to the first end portion 34 and corresponding to an outlet-side end portion in normal use. The outer plate 54 is disposed at a position on the side opposite to the second end surface 25 across the inner plate 52 provided therebetween and joined to the inner plate 52 so as to block the second space 51 longitudinally.

The second header 50 is attached with a discharge tube 56 for discharging a processing object fluid which is received in the second space 51. In the present embodiment, the discharge tube 56 is fixed to the outer plate 54 while penetrating the outer plate 54 in the thickness direction thereof, thus bringing the second space 51 into communication with a fluid collection portion outside the device through the discharge tube 56.

The channel opening/closing device 60 has a function of opening/closing the plurality of fluid channels 11 to 13 individually. In detail, the channel opening/closing device 60 is switchable between a fully opening state of opening all of the plurality of fluid channels 11 to 13 to allow a fluid to flow through the plurality of fluid channels 11 to 13 and a plurality of flow restriction states corresponding to the plurality of fluid channels 11 to 13, respectively. Each of the plurality of flow restriction states is a state of opening an opening-target fluid channel that is selected from the plurality of fluid channels for the flow restriction state and closing closing-target fluid channels that is other than the opening-target fluid channel, thereby allowing a fluid to flow only through the opening-target fluid channel.

In the present embodiment, the first opening 14 is selected from the first and second openings 14 and 15, as a closing target opening, and the channel opening/closing device 60 is supported by the end wall 42 of the first header 40 to close the first openings 14 as the closing target openings individually. Specifically, the channel opening/closing device 60 according to the present embodiment has a channel opening/closing member and an opening/closing drive section.

The channel opening/closing member is constituted by a plurality of individual opening/closing members 62 which are independent of each other. The plurality of individual opening/closing members 62 are arranged for the plurality of fluid channels 11 to 13, respectively.

The individual opening/closing member 62 according to the present embodiment has a substantially columnar shape with an outer diameter larger than the outer diameter of the first opening 14 and disposed so as to coincide the central axis thereof with the central axis of each fluid channel, being supported by the opening/closing drive section so as to be movable between a closing position and an opening position along the central axis. The closing position is, for example, the position of the individual opening/closing member 62 corresponding to the fluid channel 12A in the state shown in FIG. 7, being the position at which the individual opening/closing member 62 brings a closing end surface 62a thereof into close contact with the first end surface 24 to thereby close the first opening 14 of the fluid channel corresponding to the individual opening/closing member 62, the closing end surface 62a being one of opposite end surfaces of the individual opening/closing member 62 and being the end surface opposed to the first end surface 24 of the channel-forming body 20 (that is, the right side end surface in FIG. 7). The opening position is, for example, the position of the individual opening/closing member 62 corresponding to the fluid channel 12B in the state shown in FIG. 7, being the position at which the individual opening/closing member 62 keeps the closing end surface 62a thereof apart from the first end surface 24 axially to open the first opening 14.

The opening/closing drive section moves an arbitrary individual opening/closing member 62 of the plurality of individual opening/closing members 62 between the closing position and the opening position independently of other individual opening/closing members 62. In the present embodiment, the opening/closing drive section includes a plurality of opening/closing member holding portions 64 which individually hold the plurality of individual opening/closing members 62, respectively, biasing members 66 housed in the plurality of opening/closing member holding portions 64, respectively, and a driving force application device 68 as shown in FIG. 7.

Each of the plurality of opening/closing member holding portions 64 is inserted into the outer plate 44 of the end wall 42 along a direction parallel to the axial direction and fixed thereto, while having a shape for receiving a part of the opening/closing member holding portion 64, the part being on the side opposite to the closing end surface 62a (a part on the left side in FIG. 7), to hold the part at the outside thereof. Specifically, each of the opening/closing member holding portions 64 has a cylindrical-shaped circumferential wall 64a having an inner diameter enough to allow the opening/closing member holding portion 64 to be inserted, and an end wall 64b which blocks the end of the circumferential wall 64a, the end being one of axially opposite ends of the circumferential wall 64a and being on the side opposite to the opening/closing member holding portion 64 (the outer side end; the left end in FIG. 7). In summary, the opening/closing member holding portion 64 has a container-shape opened toward the first end surface 24.

The inner plate 43 of the end wall 42 is formed with a plurality of through holes 43a corresponding to the plurality of individual opening/closing members 62, respectively, through which holes the plurality of individual opening/closing members 62 are inserted. The individual opening/closing member 62 is movable between the closing position and the opening position with sliding against the inner circumferential surface of the circumferential wall 64a of the opening/closing member holding portion 64, while a part of the individual opening/closing member 62 keeps inserted in the opening/closing member holding portion 64.

The biasing member 66 is housed in each of the plurality of opening/closing member holding portions 64 so as to apply biasing force to each of the plurality of individual opening/closing members 62 in a direction from the closing position toward the opening position (leftward in FIG. 7). Specifically, the biasing member 66 is formed of a tension coil spring, one end thereof being coupled to the individual opening/closing member 62 and the other end being coupled to the circumferential wall 64a of the opening/closing member holding portion 64 in the present embodiment. The biasing member 66, therefore, keeps the individual opening/closing member 62 at the opening position in the state where any external force other the biasing force of the biasing member 66 (in the present embodiment, elastic tensile force of the tension coil spring) is not applied to the individual opening/closing member 62.

Inside the end wall 42, there are disposed a plurality of sealing members 65. The plurality of sealing members 65 are arranged for the plurality of individual opening/closing members 62, respectively, to block a fluid flow between the first space 41 and the opening/closing member holding portion 64 corresponding to the individual opening/closing member 62. Each of the sealing member 65 is formed of an O-ring capable of close contact with the outer circumferential surface of each individual opening/closing member 62, being sandwiched between the inner plate 43 and the outer plate 44 forming the end wall 42 in the example shown in FIG. 7. The intermediate plate 45 of the end wall 42 has a shape interposed between the inner plate 43 and the outer plate 44 in a region other than the region where each sealing member 65 exists, keeping the interval between the both plates 43 and 44 be an interval appropriate for accommodating the sealing member 65.

The driving force application device 68 applies closing driving force, individually, to each of the plurality of opening/closing member holding portions 64. The closing driving force is a driving force for moving the individual opening/closing member 62 from the opening position to the closing position against the biasing force of the biasing member 66, i.e., a driving force for pressing the closing end surface 62a of the individual opening/closing member 62 against the first end surface 24 of the channel-forming body 20 while elastically deforming the tension coil spring forming the biasing member 66 in an extension direction against the resilient force.

The driving force is not limited. Preferable examples of the driving force include a force caused by fluid pressure or electromagnetic force. In the case of using fluid pressure, the driving force application device 68 includes, for example, a fluid pressure source (e.g. a hydraulic source) for supplying a pressure fluid into the opening/closing member holding portion 64, and a plurality of valves for individually switching charge/discharge of a pressure fluid for the opening/closing member holding portion 64. In this case, the driving force application device 68 can move the corresponding individual opening/closing member 62 to the closing position by the pressure of pressure fluid through introducing the pressure fluid into a predetermined opening/closing member holding portion 64, and, conversely, the driving force application device can return the individual opening/closing member 62 to the opening position by the biasing force of the closing member 66 through releasing the pressure fluid from the opening/closing member holding portion 64. On the other hand, in the case of using electromagnetic force, each of the individual opening/closing members 62 is provided with a magnetic material, while the driving force application device 68 includes, for example, respective solenoid coils disposed around the plurality of opening/closing member holding portions 64, and a current supply circuit which supplies exciting current individually to the plurality of solenoid coil. The current supply circuit is configured to supply the solenoid coil with an exciting current having such a direction as to generate electromagnetic force that moves the individual opening/closing member 62 to the closing position against the biasing force of the biasing member 66. Through the on/off of the exciting current, the position of the individual opening/closing member 62 can be switched.

According to the foregoing-described fluid flow device 10, switching the channel opening/closing device 60 to the fully opening state, i.e., the state of opening the first openings 14 of all the fluid channels 11 to 13, enables normal use, i.e., causing a fluid to flow through each of the plurality of fluid channels, to be conducted. On the other hand, in case of occurrence of an abnormal flow such as closure in any of the plurality of fluid channels 11 to 13, opening only the fluid channel with the abnormal flow as an opening-target fluid channel and closing the other fluid channels as closing-target fluid channels enables the fluid channel where the abnormal flow exists to be cleaned efficiently and effectively. Details are as follows.

First, in normal use of the fluid flow device 10, all applications of driving force to the opening/closing member holding portions 64 from the driving force application device 68 are stopped, in the channel opening/closing device 60. This causes all the individual opening/closing members 62 to be held at respective opening positions by respective biasing forces of the biasing members 66 connected thereto and to thereby open the first openings 14 of all the fluid channels 11 to 13. In this state, a processing object fluid is introduced into the first space 41 in the first header 40 through the introduction tube 46, being distributed to all the fluid channels 11 to 13 through the corresponding first openings 14 and allowed to flow through the fluid channels 11 to 13. Respective processing object fluids which have passed through the fluid channels 11 to 13 are gathered in the second space 51 in the second header 50 and discharged to the outside of the device through the discharge tube 56.

In case where continuing such use causes a closure or an abnormal flow before reaching the closure in a certain fluid channel included in the plurality of fluid channels 11 to 13, e.g. in the fluid channel 12B shown in FIG. 7, the fluid channel 12B needs to be subject to cleaning. This cleaning can be efficiently and effectively conducted by use of the first and second headers 40 and 50 and further the channel opening/closing device 60.

Specifically, for cleaning the fluid channel 12B, the channel opening/closing device 60 is switched to the flow restriction state corresponding to the fluid channel 12B as shown in FIG. 7, that is, a state of keeping the first opening 14 corresponding to the fluid channel 12B as the opening-target fluid channel be opened, while closing the first openings 14 of the other fluid channels as the closing-target fluid channels. In the present embodiment, the driving force application device 68 applies respective closing driving forces to all the opening/closing member holding portions 64 corresponding to the fluid channels other than the fluid channel 12B, switching each of positions of respective individual opening/closing members 62 corresponding to the fluid channels other than the fluid channel 12B from the opening position to the closing position.

In this state, a cleaning liquid (e.g. water) is introduced into the first space 51 through the introduction tube 46 similarly to the normal use, passing through only the fluid channel 12B as the opening-target fluid channel included in all the fluid channels 11 to 13 to clean the fluid channel 12B, thereafter being discharged through the second header 50 and the discharge tube 56. Thus, effective and efficient cleaning of a fluid cleaning-target channel can be conducted through passing a cleaning liquid through only the fluid channel, with utilization of the existing first and second headers 40 and 50, .

In the first embodiment, it is also possible to close the first openings 14 of two or more fluid channels selected from all the fluid channels 11 to 13 simultaneously. Hence, in case of simultaneous occurrence of abnormal flows in a plurality of fluid channels, it is possible not only to clean the fluid channels one by one through sequentially opening the fluid channels having the abnormal flow but also to clean the fluid channels having the abnormal flow simultaneously through opening the fluid channels simultaneously.

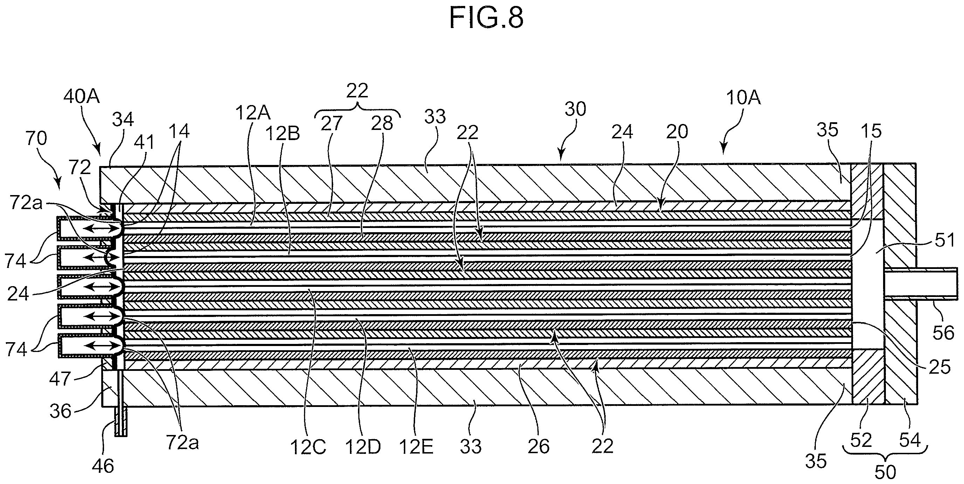

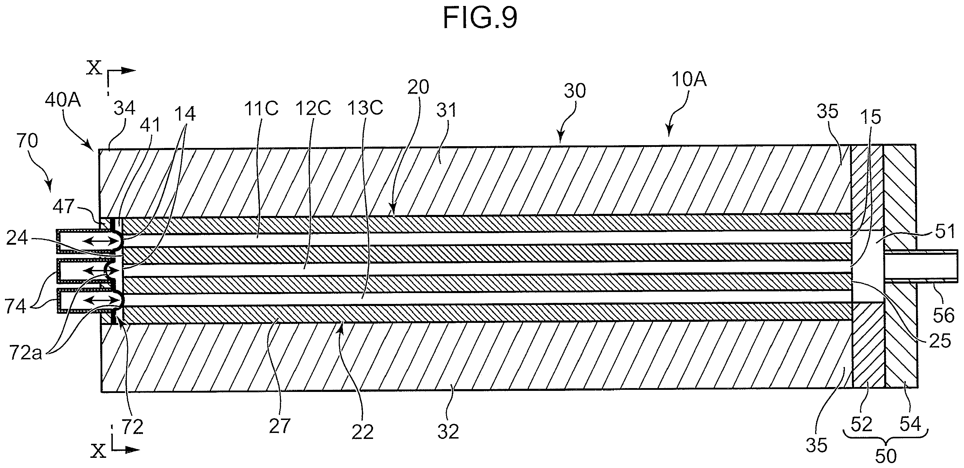

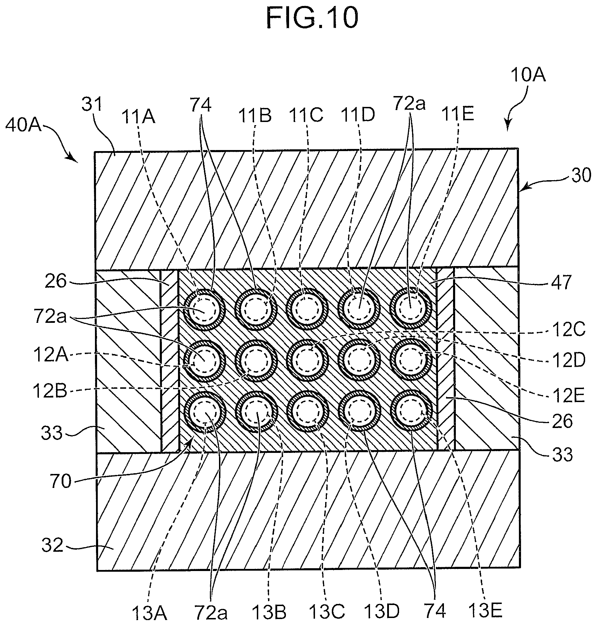

FIG. 8 to FIG. 11 show a fluid flow device 10A according to a second embodiment of the present invention. The fluid flow device 10A differs from the fluid flow device 10 according to the first embodiment only in including a channel opening/closing device 70, which is different from the channel opening/closing device 60, and a first header 40A supporting the channel opening/closing device, in place of the fluid flow device 60 and the first header 40 supporting the fluid flow device 60 according to the first embodiment. Below will be described the difference.

The first header 40A according to the second embodiment includes an end wall 47 in place of the end wall 42 according to the first embodiment. A first end portion 34 of an outer wall 30 according to the second embodiment protrudes beyond a first end surface 24 of a channel-forming body 20 longitudinally, similarly to the first embodiment. The end wall 47 is fit inside the first end portion 34 and fixed thereto at a position apart from the first end surface 24 of the channel-forming body 20 longitudinally of the channel-forming body 20 across a first space 41, thereby forming the first header 40A in collaboration with the first end portion 34. The first end portion 34 is formed with an introduction hole 36 passing through the first end portion 34 in the thickness direction thereof, and an introduction tube 46 is connected to the introduction hole 36. Hence, the introduction hole 36 and the introduction tube 46 allow a fluid (a fluid selected from a processing object fluid and a cleaning liquid) to be introduced from the outside of the device into the first space 41 through the introduction hole 36 and the introduction tube 46.

The channel opening/closing device 70 includes a single elastic opening/closing body 72 as a channel opening/closing member, a plurality of opening/closing-member receiving portions 74, and a driving force application device 78.

The elastic opening/closing body 72 is made of an elastically deformable thin plate member such as a rubber plate, integrally including a plurality of individual opening/closing portions 72a corresponding to a plurality of fluid channels 11 to 13, respectively, and a base portion 72b which connects the individual opening/closing portions 72a to each other. The base portion 72b is a flat thin plate, fixed to the inner surface of the end wall 47.

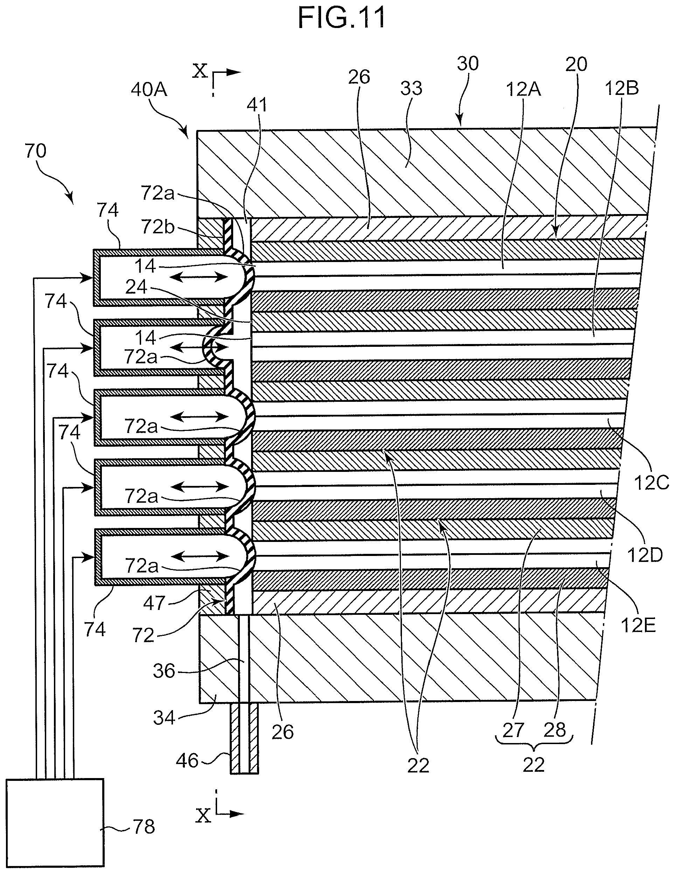

Each of the individual opening/closing portions 72a is allowed to be switched between a closing shape existing at the closing position and an opening shape existing at the opening position by elastic deformation of the elastic opening/closing body 72. The closing shape is, for example, a shape of the individual opening/closing portion 72a corresponding to a fluid channel 12A in the state shown in FIG. 11. In this shape, the individual opening/closing portion 72a protrudes, for example, in a hemispheric shape, from the base portion 72b toward a first opening 14 of the corresponding fluid channel and makes close contact with the channel-forming body 20 in the circumferential edge of the first opening 14 to thereby close the first opening 14. The opening shape is a shape inverted from the closing shape, for example, being a shape of the individual opening/closing portion 72a corresponding to a fluid channel 12B in the state shown in FIG. 11. In this shape, the individual opening/closing portion 72a protrudes, for example, in a hemispheric shape, from the base portion 72b toward a side opposite to the first opening 14 (left side in FIG. 11) to thereby open the first opening 14 at a position apart from the first end surface 24.

Each of the plurality of opening/closing-member receiving portions 74 has a container-shape opened toward the first end surface 24 similarly to the opening/closing member holding portion 64 according to the first embodiment, being fixed to the end wall 47 while penetrating the end wall 47. The opening/closing-member receiving portion 74 has an inner diameter which allows the individual opening/closing portion 72a in the opening shape and protruding to the side opposite to the first end surface 24 to be received.

The driving force application device 78 applies opening/closing driving force to each of the plurality of opening/closing-member receiving portions 74. The opening/closing driving force is a force to elastically deform the elastic opening/closing body 72 so as to change the shape of the individual opening/closing portion 72a between the closing shape and the opening shape (i.e., so as to invert). The opening/closing driving force can be generated, for example, by increasing/decreasing a fluid pressure in the opening/closing-member receiving portion 74. Specifically, making the pressure in the opening/closing-member receiving portion 74 be higher by a certain pressure than the pressure in the first space 41 generates the pressure difference that is able to bring the individual opening/closing portion 72a into the closing shape protruding to the first opening 14; conversely, making the pressure in the opening/closing-member receiving portion 74 be lower by a certain pressure than the pressure in the first space 41 generates the pressure difference that is able to bring the individual opening/closing portion 72a into the opening shape protruding toward the opening/closing-member receiving portion 74 on the side opposite to the first opening 14.

Also in the second embodiment, bringing all the plurality of individual opening/closing portions 72a into the opening shape enables the fully opening state in which all the fluid channels 11 to 13 are opened to be realized, the state allowing normal use of the fluid flow device 10A to be performed. On the other hand, in case of occurrence of an abnormal flow in any of the fluid channels, for example, the fluid channel 12B, bringing only the individual opening/closing portion 72a corresponding to the fluid channel g12B into the opening shape while bringing the other individual opening/closing portions 72a into the closing shape as shown in FIG. 11 enables efficient and effective cleaning to be conducted through causing a cleaning liquid to flow only through the fluid channel 12B with utilization of the first header 40A and a second header 50 similarly to the first embodiment.

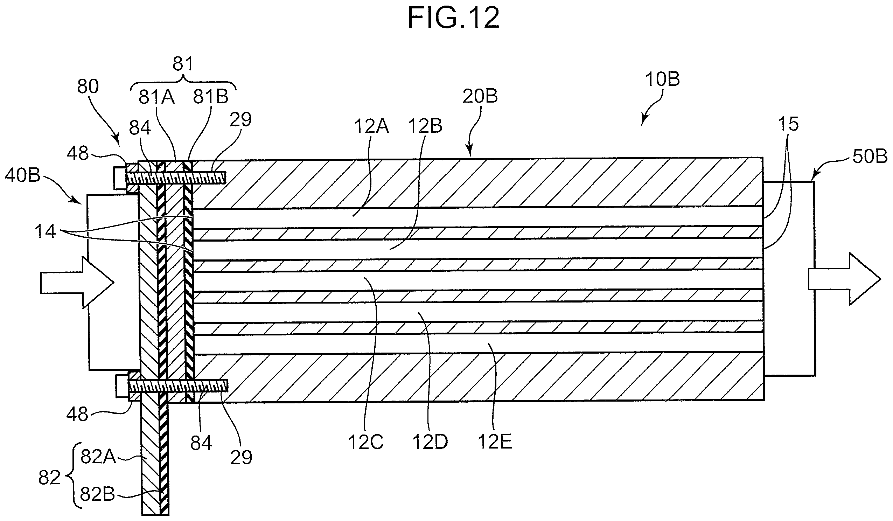

FIG. 12 to FIG. 19 show a fluid flow device 10B according to a third embodiment of the present invention. Similarly to the first and second embodiments, the fluid flow device 10B includes a channel-forming body 20B forming a plurality of fluid channels 11 to 13, a first header 40B which defines a first space communicating with a first opening 14 at one end of opposite ends of each of the fluid channels 11 to 13, a second header 50B which defines a second space communicating with a second opening 15 at the other end of opposite ends of each of the fluid channels 11 to 13, and a channel opening/closing device 80.

In the channel-forming body 20B, a total of 15 fluid channels 11 to 13 are aligned vertically and horizontally, similarly to the first embodiment. Specifically, in each of a plurality of stages (three stages in the present embodiment) aligned in an up-down direction as a first alignment direction, arranged are five fluid channels aligned in a width direction (a right-left direction) as a second alignment direction intersecting (in the present embodiment, orthogonal to) with the first alignment direction. In short, fluid channels 11A to 11E, fluid channels 12A to 12E, and fluid channels 13A to 13E are aligned.

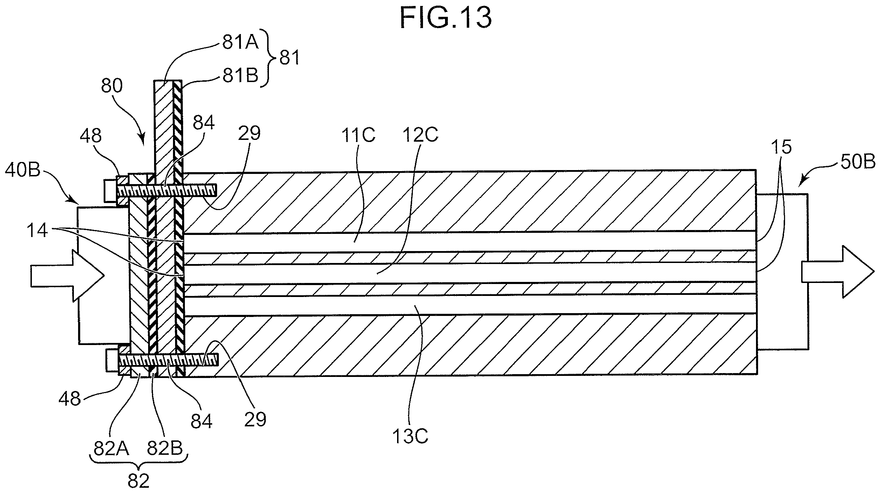

In FIG. 12 and FIG. 13, illustration of specific structures of the channel-forming body 20B, and the first and second headers 40B and 50B are omitted for convenience's sake. The structures may be either the same as those of the first and second embodiments or different from the same.

The channel opening/closing device 80 is interposed between the first header 40B and a first end surface 24 of the channel-forming body 20B and is switchable between a fully opening state of opening the first openings 14 of all the fluid channels 11 to 13 to provide communication between all the first openings 14 and the first space in the first header 40B and a plurality of flow restriction states, each of which is a state of opening only the first opening 14 of the opening-target fluid channel that is an arbitrary fluid channel selected from all the fluid channels 11 to 13 while closing the first openings 14 of the closing-target fluid channels that are the other fluid channels to provide only the communication between the first opening 14 of the opening-target fluid channel and the first space.

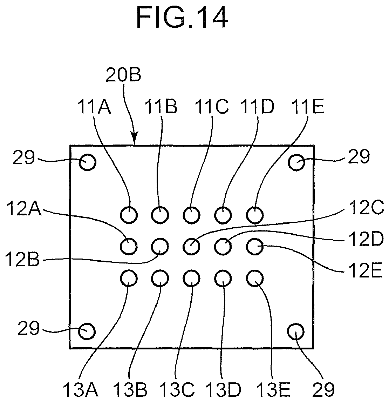

The channel opening/closing device 80 according to the present embodiment includes a first opening/closing member 81, a second opening/closing member 82, and a plurality of fixing bolts 84 as fixtures. The first end surface 24 of the channel-forming body 20B is formed with a plurality of bolt holes 29 positioned at four corners when seen from the front as shown in FIG. 14. The plurality of fixing bolts 84 can be screwed into the plurality of bolt holes 29 while penetrating the first and second opening/closing members 81 and 82 and an ear portion 48 formed in the first header 40B to thereby fasten the first and second opening/closing members 81 and 82 to the channel-forming body 20B together with the first header 40B.

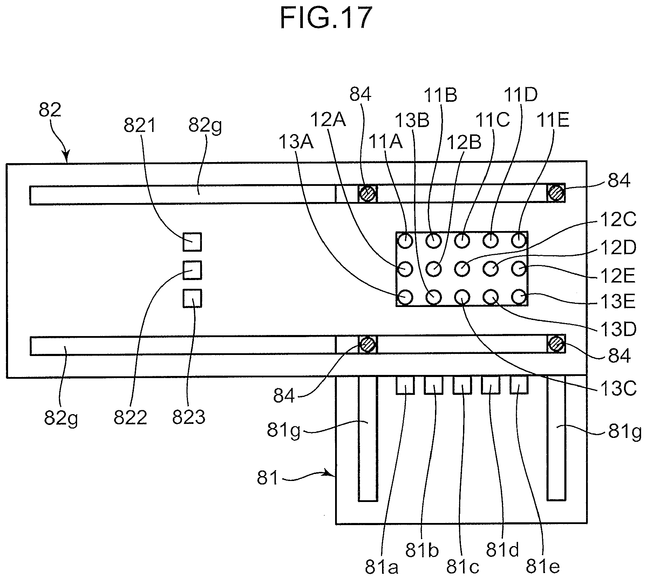

The first opening/closing member 81 is coupled to the channel-forming body 20B so as to be movable relatively to the channel-forming body 20B in a first switching movement direction (the up-down direction in the present embodiment) parallel to the first alignment direction. The second opening/closing member 82 is coupled to the channel-forming body 20B so as to be movable relatively to the channel-forming body 20B in a second switching movement direction (the width direction in the present embodiment; the right-left direction in FIG. 17 to FIG. 19) parallel to the second alignment direction. The positions of the first and second opening/closing members 81 and 82 are selected through their respective above relative movements, and switching between the fully opening state and the plurality of flow restriction states are performed through the position selection.

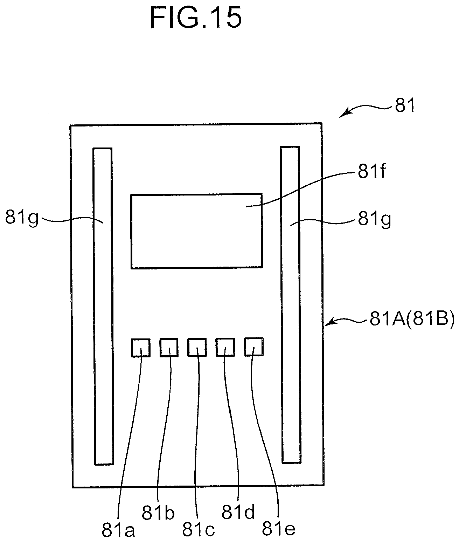

The first opening/closing member 81 is constituted by a first main body plate 81A shown in FIG. 15 and a first sealing plate 81B overlapped thereon. The first main body plate 81A has a rigidity enough to keep its shape. The first sealing plate 81B has elasticity enough to make close contact with the first end surface 24 to prevent a fluid from leakage when the first opening/closing member 81 is fastened to the channel-forming body 20B with opposition of the first sealing plate 81B to the first end surface 24.

Each of the first main body plate 81A and the first sealing plate 81B is formed with a plurality of holes penetrating each plate in the plate thickness direction thereof. The plurality of holes include a plurality of individual opening holes 81a, 81b, 81c, 81d, and 81e aligned in a width direction (the right-left direction) which is the second alignment direction, a single fully opening hole 81f formed at a position deviated in the first switching movement direction (a position deviated upward in the present embodiment) from the plurality of individual opening holes 81a to 81e, and a pair of bolt insertion holes 81g positioned at both right and left sides of the opening holes 81a to 81f.

The individual opening holes 81a to 81e are formed at respective positions for individually and simultaneously opening the first openings 14 of a plurality of fluid channels aligned in the width direction (the right-left direction) as the second alignment direction (that is, arbitrary five fluid channels selected from the five fluid channels 11A to 11E, the five fluid channels 12A to 12E, and the five fluid channels 13A to 13E shown in FIG. 14). Specifically, the individual opening holes 81a to 81e are aligned at the same interval in the width direction as the interval of the fluid channels (e.g. the fluid channels 11A to 11E) aligned in the width direction and have a shape equivalent to or slightly larger than the cross-section of the fluid channel.

The fully opening hole 81f has a shape and a size capable of opening the first openings 14 of all the fluid channels 11 to 13 simultaneously. The fully opening hole 81f according to the present embodiment has a rectangular shape large enough to cover the first openings 14 of all the fluid channels 11 to 13.

Each of the pair of bolt insertion holes 81g is a long hole extending in the up-down direction as the first switching movement direction and has a width enough to allow the fixing bolt 84 to be inserted thereinto. The first opening/closing member 81, therefore, can be fixed to the channel-forming body 20B through the fixing bolt 84 at an arbitrary position within the area corresponding to the vertical length of the pair of the bolt insertion holes 81g. The arbitrary position can be any of a fully opening position at which the fully opening hole 81f covers the first openings 14 of all the fluid channels 11 to 13 and opens the same, and three closing positions at each of which the plurality of individual opening holes 81a to 81e open, respectively, the first openings 14 of the fluid channels in a group arbitrarily selected from the three groups including the fluid channels 11A to 11E, the fluid channels 12A to 12E, and the fluid channels 13A to 13E, and close the first openings of the other fluid channels.

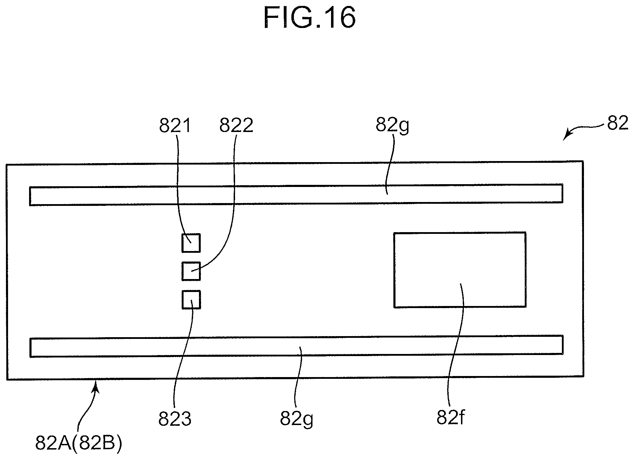

The second opening/closing member 82 is constituted by a second main body plate 82A shown in FIG. 16 and a second sealing plate 82B overlapped thereon and joined thereto. The second main body plate 82A has rigidity enough to keep its shape. The second sealing plate 82B has elasticity enough to make close contact with the outer-side surface of the first main body plate 81A of the first opening/closing member 81 to prevent a fluid from leakage when the second opening/closing member 82 is fastened to the channel-forming body 20B so as to be laid on the first opening/closing member 81 with opposition of the second sealing plate 82B to the first opening/closing member 81.

Each of the second main body plate 82A and the second sealing plate 82B is formed with a plurality of holes penetrating each plate in the plate thickness direction thereof. The plurality of holes include a plurality of individual opening holes 821, 822, and 823 aligned in the up-down direction as the first alignment direction, a single fully opening hole 82f formed at a position deviated in the second switching movement direction (a position deviated rightward in the present embodiment) from the individual opening holes 821 to 823, and a pair of bolt insertion holes 82g positioned at both up and down sides of the opening holes 821 to 823 and 82f.

The individual opening holes 821 to 823 are formed at respective positions for individually and simultaneously opening the second openings 14 of a plurality of fluid channels (arbitrary three fluid channels selected from the three fluid channels 11A, 12A, and 13A, the three fluid channels 11B, 12B, and 13B, the three fluid channels 11C, 12C, and 13C, the three fluid channels 11D, 12D, and 13D, and the three fluid channels 11E, 12E, and 13E shown in FIG. 14) aligned in the up-down direction as the first alignment direction. Specifically, the individual opening holes 821 to 823 are aligned at the same interval in the up-down direction as the interval of the fluid channels (e.g. the fluid channels 11A, 12A, and 13A) aligned in the up-down direction and have a shape equivalent to or slightly larger than the cross-section of the fluid channel.

The fully opening hole 82f has a shape and a size enough to open the second openings 14 of all the fluid channels 11 to 13 simultaneously. The fully opening hole 82f according to the present embodiment has a rectangular shape large enough to cover all the fluid channels 11 to 13, similarly to the fully opening hole 81f.

Each of the pair of bolt insertion holes 82g is a long hole extending in the width direction (the right-left direction) as the second switching movement direction and has a width enough to allow the fixing bolt 84 to be inserted thereinto. The second opening/closing member 82, therefore, can be fixed to the channel-forming body 20B through the fixing bolt 84 at an arbitrary position within the area corresponding to the length of the pair of the bolt insertion holes 82g in the right-left direction. The arbitrary position can be any of a fully opening position at which the fully opening hole 82f covers the second openings 14 of all the fluid channels 11 to 13 and opens the same, and five closing positions at each of which the plurality of individual opening holes 821 to 823 open, respectively, the second openings 14 of the fluid channels in a group arbitrarily selected from the five groups including the fluid channels 11A, 12A, and 13A, the fluid channels 11B, 12B, and 13B, the fluid channels 11C, 12C, and 13C, the fluid channels 11D, 12D, and 13D, and the fluid channels 11E, 12E, and 13E, and close the second openings of the other fluid channels.

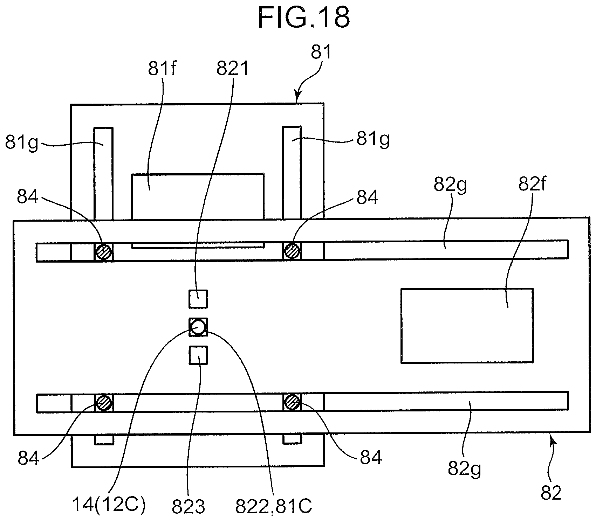

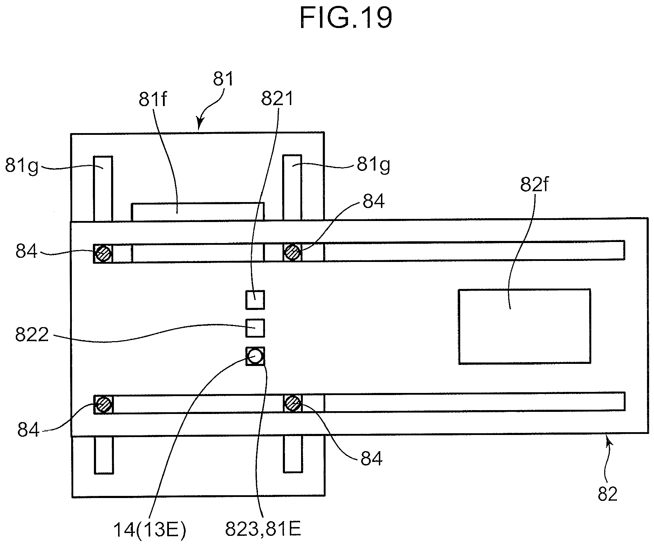

Also in the third embodiment, the combination of a position at which the first opening/closing member 81 is fixed to the channel-forming body 20B and a position at which the second opening/closing member 82 is fixed to the channel-forming body 20B enables the states of the channel opening/closing device 80 for opening and closing the first opening 14 to be switched. Specifically, as shown in FIG. 17, fixing the first and second opening/closing members 81 and 82 to the channel-forming body 20B at the fully opening position at which the respective fully opening holes 81f and 82f of the first and second opening/closing members 81 and 82 cover the first openings 14 of all the fluid channels 11 to 13 enables the first and second opening/closing members 81 and 82 to open the first openings 14 of all the fluid channels 11 to 13 to thereby allow normal use of the fluid flow device 10 to be performed. By contrast, fixing the first and second opening/closing members 81 and 82 to the channel-forming body 20B, for example, at a position where the individual opening holes 81a to 81e of the first opening/closing member 81 open the first openings 14 of the fluid channels 12A to 12E included in the fluid channels 11 to 13 and the individual opening holes 821 to 823 of the second opening/closing member 82 open the fluid channels 11C, 12C, and 13C included in the fluid channels 11 to 13, namely, a specific closing position included in the plurality of closing positions, makes it possible to open only the first opening 14 of the fluid channel 12C included in the fluid channels 11 to 13 through the individual opening holes 822 and 81C overlapping with each other and to close the first openings 14 of the other fluid channels, as shown in FIG. 18. In this state, the fluid channel 12C can be effectively and efficiently cleaned. Alternatively, fixing the first and second opening/closing members 81 and 82 to the channel-forming body 20B, for example, at a position where the individual opening holes 81a to 81e of the first opening/closing member 81 open the first openings 14 of the fluid channels 13A to 13E included in the fluid channels 11 to 13 and the individual opening holes 821 to 823 of the second opening/closing member 82 open the fluid channels 11E, 12E, and 13E included in the fluid channels 11 to 13, that is, the closing position different from the above closing position, makes it possible to open the first opening 14 of only the fluid channel 13E included in the fluid channels 11 to 13 through the individual opening holes 823 and 81e overlapping with each other and closing the first openings 14 of the other fluid channels, as shown in FIG. 19. In this state, the fluid channel 13E can be effectively and efficiently cleaned.

Switching the opening/closing states can be realized also in a device including only a single movable opening/closing member in place of the combination of the first and second opening/closing members 81 and 82. However, in this case, selecting an arbitrary state from the fully opening state and the plurality of open states requires relative positions of the movable opening/closing member to the channel-forming body as many as the states required to be switched. Accordingly, in the case where the number of the states is large (i.e. when the number of the fluid channels is large), the movable opening/closing member is required to be relatively moved by a large amount to the channel-forming body. By contrast, the combination of the first and second opening/closing members involves distribution of the required amount of relative movements of the first and second opening/closing members to the channel-forming body for switching the states to the first switching movement direction and the second switching movement direction, which distribution reduces the movement amounts to allow the entire device to be compact.

It is also possible to omit the fully opening holes 81f and 82f of the first and second opening/closing members 81 and 82. In this case, normal use can be performed by removing the first and second opening/closing members 81 and 82 and fastening the first header 40B directly to the channel-forming body 20. This means that the fully opening holes 81f and 82f included in the first and second opening/closing members 81 and 82 provide them with an advantage of eliminating the need for attaching/detaching the first and second opening/closing members 81 and 82 to/from the channel-forming body 20B for normal use.

Although either of the channel opening/closing devices 60, 70, and 80 according to the foregoing-described embodiments is to open/close the first opening 14 of a fluid channel, the part of a fluid channel to be opened/closed by the channel opening/closing device is not particularly limited. For example, the channel opening/closing device may conduct closing and opening at the second opening. Besides, the fluid flow device 80 according to the third embodiment is also able to close and open a fluid channel at a middle part of the fluid channel.

However, as in the above respective embodiments, it is preferable that the channel opening/closing device is disposed so as to close a closing target opening selected from the first and second openings of the closing-target fluid channel in each of the plurality of flow restriction states. This mode enables the cleaning liquid supplied to a header covering the closing target opening out of the first and second headers to be effectively restrained from entering the closing-target fluid channel to thereby perform efficient cleaning. This effect, therefore, can be obtained also by closing the second opening 14 according to each of the embodiments to supply a cleaning liquid to the second header 50.

As described in the foregoing, there is provided a method that enables a fluid channel to be effectively cleaned by effective utilization of an existing facility, the fluid channel being included in a plurality of fluid channels that are formed in a channel-forming body of a fluid flow device and being a fluid channel in which an abnormal flow occurs, and there is provided a fluid flow device having a function of making the cleaning possible.

The provided method is a method for cleaning an arbitrary fluid channel of a fluid flow device, as a cleaning-target channel, the fluid flow device including a channel-forming body which forms a plurality of fluid channels each having a first opening and a second opening at opposite ends, the channel-forming body having an outer surface in which there exist a first region where the respective first openings of the plurality of fluid channels are gathered and a second region where the second openings of the plurality of fluid channels are gathered, a first header which covers collectively the first openings in the first region to thereby define a first space communicating with each of the first opening, and a second header which covers collectively the second openings in the second region to thereby define a second space communicating with each of the second openings, the fluid flow device allowing a fluid supplied to one of the first header and the second header to flow through the plurality of fluid channels and to flow into the other of the first header and the second header. The method includes: closing each non-cleaning-target channel which is included in the plurality of fluid channels and other than the cleaning-target channel; and supplying a cleaning liquid to a cleaning-liquid supply header which is selected from the first header and the second header, in a state where the non-cleaning-target channel is closed, to thereby cause the cleaning liquid to flow only through the cleaning-target channel.

The method makes it possible to cause a cleaning liquid to flow only through a cleaning-target channel to thereby conduct efficient cleaning through extremely simple operation including closing the non-cleaning-target channel and supplying a cleaning liquid to the cleaning-liquid supply header selected from the first and second headers.

In the method, it is preferable that closing the non-cleaning-target channel is closing a closing target opening selected from the first opening and the second opening of the non-cleaning-target channel, and the cleaning-liquid supply header is a header that covers the closing target opening, the cleaning-liquid supply header being one of the first header and the second header. This enables leaning with a cleaning liquid to be performed. For example, if the non-cleaning-target channel is closed not at the first or second opening but at a middle part located behind them, the cleaning liquid supplied to the cleaning-liquid supply header will be allowed to fill a region up to the middle part in the non-cleaning-target channel, thus being wastefully supplied; in contrast, covering the closing target opening and selecting the header which covers the closing target opening as the cleaning-liquid supply header makes it possible to effectively restrain a cleaning liquid from wastefully entering the non-cleaning-target channel.

Also provided is a fluid flow device having a function of making such cleaning as described above be possible. The fluid flow device includes: a channel-forming body which forms a plurality of fluid channels each having a first opening and a second opening at opposite ends thereof, the channel-forming body having an outer surface in which there exist a first region where the first openings of the plurality of fluid channels are gathered and a second region where the second openings of the plurality of fluid channels are gathered; a first header which covers collectively the first openings in the first region to thereby define a first space communicating with each of the first openings; a second header which covers collectively the second openings in the second region to thereby define a second space communicating with each of the second openings; and a channel opening/closing device which opens/closes the plurality of fluid channels. The channel opening/closing device is switchable between a fully opening state of opening all the plurality of fluid channels to allow a fluid to flow through the plurality of fluid channels and a plurality of flow restriction states corresponding to the plurality of fluid channels, respectively, each of the flow restriction states being a state of opening an opening-target fluid channel, which is included in the plurality of fluid channels and corresponds to the flow restriction state, while closing a closing-target fluid channel, which is included in the plurality of fluid channels and other than the opening-target fluid channel, to thereby allow a fluid to flow only through the opening-target fluid channel.

According to the fluid flow device, bringing the channel opening/closing device into the fully opening state, for normal use, allows a fluid to flow through each of the plurality of fluid channels. On the other hand, in case of occurrence of an abnormal flow such as closure in any of the plurality of fluid channels, selecting one flow restriction state from the plurality of flow restriction states, the selected flow restriction state being a state of opening only a fluid channel with the abnormal flow as the opening-target fluid channel while closing the other fluid channels as the closing-target fluid channel, and then supplying one of the first header and the second header (preferably a header closer to the channel opening/closing device) with a cleaning liquid makes it possible to cause the cleaning liquid to flow only through the channel having the abnormal flow to effectively clean the channel.

The channel opening/closing device is preferably disposed so as to close a closing target opening selected from the first opening and the second opening of the closing-target fluid channel in each of the plurality of flow restriction states. This mode enables a cleaning liquid supplied to one header of the first and second headers, the one header covering the closing target opening to be effectively restrained from entering the closing-target fluid channel, thereby allowing cleaning with the cleaning liquid to be performed more efficiently.

Preferably, the channel opening/closing device includes, for example, a channel opening/closing member including a plurality of individual opening/closing portions provided to the plurality of fluid channels, respectively, the plurality of individual opening/closing portions being movable independently of each other between a closing position at which each of the plurality of individual opening/closing portions makes close contact with the channel-forming body so as to close the closing target openings of the plurality of fluid channels and an opening position at which each of the plurality of individual opening/closing portions is apart from the closing target opening to open the fluid channel; and an opening/closing drive device which moves an arbitrary individual opening/closing portion of the plurality of individual opening/closing portions between the closing position and the opening position independently of the other individual opening/closing portion. According to the channel opening/closing device, setting only a specific individual opening/closing portion included in the plurality of individual opening/closing portions to the opening position and setting the other individual opening/closing portions to the closing position makes it possible to produce a state of opening only a fluid channel corresponding to the specific individual opening/closing portion to cause a cleaning liquid to flow through the opened fluid channel. Besides, in case of simultaneous occurrence of abnormal closures in two or more fluid channels, it is also possible to bring two or more individual opening/closing portions corresponding to the two or more fluid channels to the opening position to cause a cleaning liquid to flow simultaneously through the two or more fluid channels.

The channel opening/closing member may be either constituted by a plurality of individual opening/closing members which are divisionally provided for the plurality of individual opening/closing portions, or a single elastic opening/closing body that is elastically deformable, the elastic opening/closing body integrally having the plurality of individual opening/closing portions and a base portion joining the plurality of individual opening/closing portions with each other, the elastic opening/closing body being deformable to displace an arbitrary individual opening/closing portion of the plurality of individual opening/closing portions between the opening position and the closing position.

The channel opening/closing device may, alternatively, include at least one movable opening/closing member coupled to the channel-forming body so as to be movable relatively to the channel-forming body in a switching movement direction intersecting with the plurality of fluid channels, and a fixture which fixes the movable opening/closing member to the channel-forming body at a plurality of opening/closing switching positions aligned in the switching movement direction, wherein the at least one opening/closing member has a plurality of individual opening holes for opening the plurality of fluid channels, respectively, and is selectively located among a plurality of flow restriction positions through relative movement of the at least one opening/closing member in the switching movement direction to the channel-forming body, each of the flow restriction positions being a position at which the at least one opening/closing member opens only the opening-target fluid channel included in the plurality of fluid channels and closing the closing-target fluid channels.

Although the movable opening/closing member may be configured to be removed from the channel-forming body to allow all the fluid channels to be opened, it is also possible that the movable opening/closing member further has a fully opening hole for opening all the fluid channels, and the movable opening/closing member further has a fully opening position at which the fully opening hole opens all the fluid channels. This eliminates the need for removing the movable opening/closing member from the channel-forming body for normal use.

In the case where the plurality of fluid channels are aligned in both a first alignment direction and a second alignment direction intersecting with the first alignment direction, the at least one movable opening/closing member preferably includes a first opening/closing member coupled to the channel-forming body so as to be movable relatively to the channel-forming body in a first switching movement direction parallel to the first alignment direction and a second opening/closing member coupled to the channel-forming body so as to be movable relatively to the channel-forming body in a second switching movement direction parallel to the second alignment direction, wherein the first opening/closing member has a plurality of individual opening holes which individually and simultaneously open a plurality of aligned fluid channels that are aligned in the second alignment direction and included in the plurality of fluid channels, and the second opening/closing member has a plurality of individual opening holes which individually and simultaneously open a plurality of aligned fluid channels that are aligned in the first alignment direction and included in the plurality of fluid channels; this allows the plurality of flow restriction states to be formed by the combination of a relative position of the first opening/closing member in the first switching movement direction to the channel-forming body and the relative position of the second opening/closing member in the second switching movement direction to the channel-forming body. This mode allows the amount of movement required of the first and second opening/closing members for the switching among the plurality of flow restriction states to be drastically smaller than the amount of movement required of the single opening/closing member for forming the same number of flow restriction states as the number of the plurality of fluid channels by use of only a single opening/closing member, thereby enabling the entire device to be made compact.

## Claims

1. A fluid flow device cleaning method for cleaning an arbitrary fluid channel of a fluid flow device, as a cleaning-target channel, the fluid flow device including a channel-forming body which forms a plurality of fluid channels each having a first opening and a second opening at opposite ends, the channel-forming body having an outer surface in which there exist a first region where the respective first openings of the plurality of fluid channels are gathered and a second region where the second openings of the plurality of fluid channels are gathered, a first header which covers collectively the first openings in the first region to thereby define a first space communicating with each of the first opening, and a second header which covers collectively the second openings in the second region to thereby define a second space communicating with each of the second openings, the fluid flow device allowing a fluid supplied to one of the first header and the second header to flow through the plurality of fluid channels and to flow into the other of the first header and the second header, the method comprises:
closing each non-cleaning-target channel which is included in the plurality of fluid channels and other than the cleaning-target channel; and
supplying a cleaning liquid to a cleaning-liquid supply header which is selected from the first header and the second header, in a state where the non-cleaning-target channels is closed, to thereby cause the cleaning liquid to flow only through the cleaning-target channel.

2. The fluid flow device cleaning method according to claim 1, wherein closing the non-cleaning-target channel is closing a closing target opening selected from the first opening and the second opening of the non-cleaning-target channel, and the cleaning-liquid supply header is a header that covers the closing target opening, the cleaning-liquid supply header being one of the first header and the second header.

3. A fluid flow device comprising:
a channel-forming body which forms a plurality of fluid channels each having a first opening and a second opening at opposite ends thereof, the channel-forming body having an outer surface in which there exist a first region where the first openings of the plurality of fluid channels are gathered and a second region where the second openings of the plurality of fluid channels are gathered;
a first header which covers collectively the first openings in the first region to thereby define a first space communicating with each of the first openings;
a second header which covers collectively the second openings in the second region to thereby define a second space communicating with each of the second openings; and
a channel opening/closing device which opens/closes the plurality of fluid channels, wherein
the channel opening/closing device is switchable between a fully opening state of opening all the plurality of fluid channels to allow a fluid to flow through the plurality of fluid channels and a plurality of flow restriction states corresponding to the plurality of fluid channels, respectively, each of the flow restriction states being a state of opening an opening-target fluid channel, which is included in the plurality of fluid channels and corresponds to the flow restriction state, while closing a closing-target fluid channel, which is included in the plurality of fluid channels and other than the opening-target fluid channel, to thereby allow a fluid to flow only through the opening-target fluid channel.

4. The fluid flow device according to claim 3, wherein the channel opening/closing device is disposed so as to close a closing target opening selected from the first opening and the second opening of the closing-target fluid channel in each of the plurality of flow restriction states.

5. The fluid flow device according to claim 4, wherein the channel opening/closing device includes a channel opening/closing member including a plurality of individual opening/closing portions provided to the plurality of fluid channels, respectively, the plurality of individual opening/closing portions being movable independently of each other between a closing position at which each of the plurality of individual opening/closing portions makes close contact with the channel-forming body so as to close the closing target openings of the plurality of fluid channels and an opening position at which each of the plurality of individual opening/closing portions is apart from the closing target opening to open the fluid channel, and an opening/closing drive device which moves an arbitrary individual opening/closing portion of the plurality of individual opening/closing portions between the closing position and the opening position independently of the other individual opening/closing portion.

6. The fluid flow device according to claim 5, wherein the channel opening/closing member is constituted by a plurality of individual opening/closing members which are divisionally provided for the plurality of individual opening/closing portions.

7. The fluid flow device according to claim 5, wherein the channel opening/closing member is a single elastic opening/closing body that is elastically deformable, the elastic opening/closing body integrally having the plurality of individual opening/closing portions and a base portion joining the plurality of individual opening/closing portions with each other, the elastic opening/closing body being deformable to displace an arbitrary individual opening/closing portion of the plurality of individual opening/closing portions between the opening position and the closing position.

8. The fluid flow device according to claim 3 or 4, wherein the channel opening/closing device alternatively includes at least one movable opening/closing member coupled to the channel-forming body so as to be movable relatively to the channel-forming body in a switching movement direction intersecting with the plurality of fluid channels, and a fixture which fixes the movable opening/closing member to the channel-forming body at a plurality of opening/closing switching positions aligned in the switching movement direction, and wherein the at least one opening/closing member has a plurality of individual opening holes for opening the plurality of fluid channels, respectively, and is located selectively among a plurality of flow restriction positions through relative movement of the at least one opening/closing member in the switching movement direction to the channel-forming body, each of the flow restriction positions being a position at which the at least one opening/closing member opens only the opening-target fluid channel included in the plurality of fluid channels and closing the closing-target fluid channels.

9. The fluid flow device according to claim 8, wherein the movable opening/closing member further has a fully opening hole which opens all the fluid channels, and the movable opening/closing member further has a fully opening position at which the fully opening hole opens all the fluid channels.

10. The fluid flow device according to claim 8, wherein the plurality of fluid channels are aligned in both a first alignment direction and a second alignment direction intersecting with the first alignment direction, the at least one movable opening/closing member includes a first opening/closing member coupled to the channel-forming body so as to be movable relatively to the channel-forming body in a first switching movement direction parallel to the first alignment direction and a second opening/closing member coupled to the channel-forming body so as to be movable relatively to the channel-forming body in a second switching movement direction parallel to the second alignment direction, the first opening/closing member having a plurality of individual opening holes which individually and simultaneously open a plurality of aligned fluid channels that are aligned in the second alignment direction and included in the plurality of fluid channels, the second opening/closing member having a plurality of individual opening holes which individually and simultaneously open a plurality of aligned fluid channels that are aligned in the first alignment direction and included in the plurality of fluid channels, the plurality of flow restriction states being formed by a combination of a relative position of the first opening/closing member in the first switching movement direction to the channel-forming body and a relative position of the second opening/closing member in the second switching movement direction to the channel-forming body.
